Europäisches Patentamt

European Patent Office

Office européen des brevets

(19)

(11) Veröffentlichungsnummer: **0 193 969
B1**

(12) **EUROPÄISCHE PATENTSCHRIFT**

(45) Veröffentlichungstag der Patentschrift:
**29.08.90**

(21) Anmeldenummer: **86103060.9**

(22) Anmeldetag: **07.03.86**

(51) Int. Cl.⁵: **C02F 3/28**

(54) **Festbett-Säulenreaktor für anaerobe Abbauprozesse.**

(30) Priorität: **08.03.85 DE 3508274**

(43) Veröffentlichungstag der Anmeldung:
**10.09.86 Patentblatt 86/37**

(45) Bekanntmachung des Hinweises auf die Patenterteilung:
**29.08.90 Patentblatt 90/35**

(84) Benannte Vertragsstaaten:
**BE DE NL SE**

(56) Entgegenhaltungen:
**EP-A- 0 170 332
DE-A- 2 924 169
DE-A- 3 326 879
US-A- 4 248 972**

**Die Akte enthält technische Angaben, die nach dem Eingang der Anmeldung eingereicht wurden und die nicht in dieser Patentschrift enthalten sind.**

(73) Patentinhaber: **Forschungszentrum Jülich GmbH,
Postfach 1913, D-5170 Jülich(DE)**

(72) Erfinder: **Aivasidis, Alexander, Dr.,
Kopernikusstrasse 33, D-5170 Jülich(DE)**
Erfinder: **Wandrey, Christian, Prof., Wolfshovener
Strasse 139, D-5170 Jülich-Stetternich(DE)**
Erfinder: **Pick, Rainer, Dorfstrasse 36,
D-5541 Eschfeld(DE)**

## Beschreibung

Die Erfindung bezieht sich auf einen Säulenreaktor zur Durchführung anaerober Abbauprozesse mit einer Festbett-Schüttung, die von der Reaktionsflüssigkeit aufwärts durchströmt wird.

Die Durchführung anaerober Abbauprozesse an trägerfixierten Mikroorganismen gewinnt zunehmend an Bedeutung. Besonders interessant erscheint die anaerobe Abwasserreinigung, bei der im Gegensatz zum Belebtschlammverfahren relativ geringe Restschlammengen anfallen und der Gesamtprozeß energetisch günstiger ist, da zum einen der Eintrag von Sauerstoff entfällt und zum anderen als Energieträger brauchbares Biogas entsteht.

Voraussetzung für eine gewerbliche Anwendbarkeit des Verfahrens sind hohe Raum/Zeitausbeuten, d.h., pro Reaktorvolumen soll möglichst viel Abwassersubstrat mit relativ kurzer Verweilzeit umgesetzt werden.

In jüngster Zeit wurden daher Verfahren zur Immobilisierung aktiver Biomasse entwickelt, die es erlauben, gewerblich anfallende Abwassermengen in tragbarer Zeit mit Reaktoren von angemessener Größe zu bewältigen. Ein mit dem Einsatz von Schüttungen kleinpartikulärer Trägermaterialien von z.B. 5 - 15 mm, die gegenüber gröberen Teilen eine größere Oberfläche für die Zellfixierung aufweisen, auftretendes Problem besteht jedoch darin, daß bei längerer Betriebszeit Überschußschlamm anfällt, was zu Verstopfungen und Diffusionslimitierung Anlaß gibt sowie zur Ausbildung von Pfropfenströmungen. Von Ir. J.J. Heijnen (VDI-Tagung, Krefeld, Okt. 1983 "Technik der anaeroben Abwasserreinigung") werden daher grobkörnige Packungen mit Partikelgrößen von 2–6 cm und Maximalhöhen von 10 m empfohlen und Kapazitätsgrenzen von 4–10 kg CSB/m³d genannt.

Ferner nimmt die Aufladung der Reaktionsmischung mit Biogas mit fortschreitender Reaktion über die Säule hinweg zu, wodurch das Umsetzungssystem (fest/flüssig/gasförmig) beeinträchtigt wird.

Aus diesen Gründen werden Säulenreaktoren mit kleinpartikulären Trägern, deren Festbettsäulenhöhe über etwa 2 m hinausgeht, als nicht mehr optimal arbeitend angesehen.

Eine Verminderung der spezifischen Aktivität der Säule, um so die zunehmende Blockierung des Festbetts zu verhindern, oder aber eine entsprechende Höhenbegrenzung des Reaktors, erscheint weniger wirtschaftlich, da zum einen insgesamt größere Reaktoren gebaut werden müßten und zum anderen das notwendige Areal bei einer "Flachbauweise" mit entsprechendem Säulenquerschnitt oder aber einer Vielzahl von Parallelsäulen wirtschaftlich unzweckmäßig wäre.

Ziel der Erfindung ist daher eine den Erfordernissen der Praxis angepaßte Säulenreaktorbauweise, mit der hohe spezifische Aktivitäten des Biokatalysators zugelassen werden können und eine erfolgreiche Arbeitsweise über lange Betriebszeiten hinweg möglich ist, wobei auf begrenztem Areal hochgebaut werden kann.

Dieses Ziel wird gemäß der Erfindung dadurch erreicht, daß das Festbett durch Siebböden in übereinander angeordnete Abschnitte unterteilt ist, mit Zwischenräumen, in denen allgemein (umgekehrt)-trichterförmige, zu einem oder mehreren Steigrohr(en) außerhalb der Säule führende Gasableitungen und Gas- und/oder Flüssigkeitseinlässe unterhalb des Siebbodens vorgesehen sind.

Mit einem solchen in übereinander angeordnete Festbettabschnitte mit Zwischenräumen unterteilten Säulenreaktor kann eine effektive und über lange Zeiten hinweg angemessene Arbeitsweise erreicht werden, da Überschußschlamm zum einen laufend durch Flotationserscheinungen über die Gasableitungen ausgetragen (und im Schlammabscheider des Gassammelraums abgetrennt) wird und zum anderen durch Spülmedium, das wiederkehrend über die entsprechenden Einlässe unterhalb der Siebböden zugelassen wird, in Zwischenphasen ausgetrieben werden kann.

Die Zwischenräume zwischen den Abschnitten ergeben sich aus dem Abstand zwischen dem oberen Ende der Festbettschüttung eines Abschnittes und dem durchlässigen oder Siebboden des nachfolgenden Abschnitts. In diesem Zwischenraum sind die umgekehrt trichterförmigen Gasableitungen angeordnet, die, im Siebboden montiert, durch die Packung des nächstfolgenden Abschnitts hindurch nach außen zu Steigrohren geführt werden.

Mit den umgekehrt trichterförmigen Gasableitungen wirken insbesondere vom Umfang her in die Säule vorspringende, den freien Querschnitt verengende, ringförmige Leitelemente zusammen, deren Öffnungsquerschnitt geringer ist als derjenige der Trichterbasis, so daß die in der aufsteigenden Gas/Flüssigkeits-Mischung enthaltenen Gasblasen in den Trichter hineingeleitet werden, während die Flüssigkeit durch den "Ringspalt" zwischen Leitelement und Trichter nach außen-aufwärts zum nächsten Abschnitt strömt.

Dabei soll der "Ringspalt" einen solchen Querschnitt haben, daß kein merklicher Druckverlust an dieser Stelle auftritt. Um eine optimale Anpassung des freien Querschnitts dieses "Ringspalts" an die jeweils herrschenden Bedingungen zu ermöglichen, ist der Gasableitungstrichter insbesondere höhenverstellbar innerhalb des Zwischenraums montiert.

Der Basisquerschnitt des Gasableitungstrichters, der mit dem ringförmigen Leitelement zusammenwirkt, kann grundsätzlich frei gewählt werden, zweckmäßig ist jedoch ein den Säulenquerschnitt weitgehend überdeckender Basisquerschnitt des Trichters, der noch genügend Platz für den Flüssigkeitsstrom läßt.

Der Neigungswinkel des Trichterkonus' gegen die Horizontale wird innerhalb des Zwischenraums im Hinblick darauf optimiert, daß ein zu flacher Trichter den Verlust von Blasen mit sich bringen kann, während ein zu steiler Trichter wegen der dann erforderlichen Höhe des Zwischenraums unzweckmäßig ist. Neigungswinkel zwischen 15 und 60° sind besonders brauchbar, insbesondere ein solcher um 35°.

Um die Gasableitung aus dem Trichter in das Steigrohr zu erleichtern, wird ein ansteigendes Verbindungsrohr (insbesondere mit einem Winkel von 15 bis 30° gegen die Horizontale) gewählt.

Die Gasableitungstrichter können jeweils zu einem gesonderten Steigrohr führen oder aber in ein gemeinsames Steigrohr einmünden. Die Steigrohre reichen zumindest bis über den oberen Flüssigkeitsablauf des Reaktors und münden in einen Gassammelraum. Der Querschnitt der Gasableitungen aus den unteren Abschnitten der Säule kann ggf. zur Anpassung an eine intensivere Gasentwicklung im unteren Säulenbereich größer als bei den Ableitungen aus den höheren Abschnitten gewählt werden.

Die einzelnen Abschnitte des Säulenreaktors können aus fertigungstechnischen Gründen untereinander gleich sein. Es mag jedoch auch zweckmäßig sein, wenn die Höhe der Abschnitte mit der Höhe des Säulenreaktors zunimmt, wodurch einer Konzentrationsabnahme im Substrat mit fortschreitender Reaktion (Säulenhöhe) Rechnung getragen werden kann.

Analog kann auch die Korngröße des Trägers bzw. der Durchmesser der Trägerkörper von unten nach oben eine Staffelung erfahren, wobei im unteren Bereich gröbere (mit z.B. 30 - 50 mm ⌀) und nach oben hin feinere (bis z.B. 15 - 9 mm ⌀) Trägerkörper vorgesehen werden.

Die seitlichen Einlaßstutzen unterhalb der Siebböden, mit deren Hilfe eine Überschußschlammausspülung erreicht werden soll, bieten zusätzliche Möglichkeiten der Prozeßsteuerung durch über die Höhe verteilten Substratzusatz oder Teilrezyklierung oder aber Reagenzzufuhr.

Die Zufuhr der Reaktionsflüssigkeit erfolgt in üblicher Weise am Boden des Säulenreaktors, insbesondere über einen sternförmigen Flüssigkeitsverteiler, und am Kopf der Säule wird die Reaktionsflüssigkeit über ein insbesondere ringförmiges Entnahmerohr abgezogen, welches nach oben weisende Bohrungen von insbesondere etwa 4 bis 5 mm Durchmesser aufweist, über die die abzuziehende Flüssigkeit in das Ringrohr eindringt.

Die Schütthöhe der einzelnen Festbettabschnitte beträgt zweckmäßigerweise 50 bis 200 cm, insbesondere 100 bis 160 cm, im Falle von fixierten Biokatalysatoren mit einer Aktivität von 5 - 16 kg-CSB/kg.x.d (x = Biomassekonzentration als Trockenmasse), abhängig auch vom CSB des Zulaufs.

Die vorstehend erläuterte Bauweise des Säulenreaktors eignet sich für anaerobe Prozesse im Festbett mit und ohne Rezyklierung von durchgesetzter Flüssigkeit.

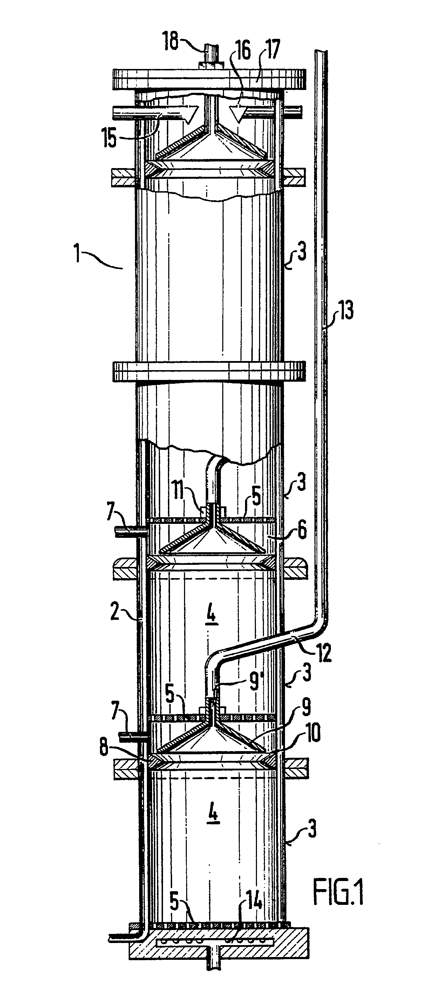

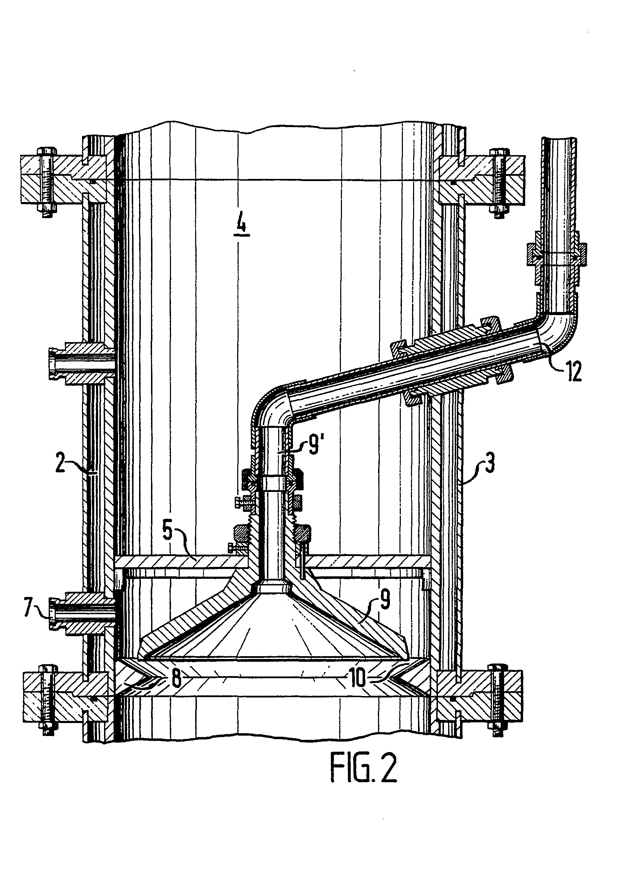

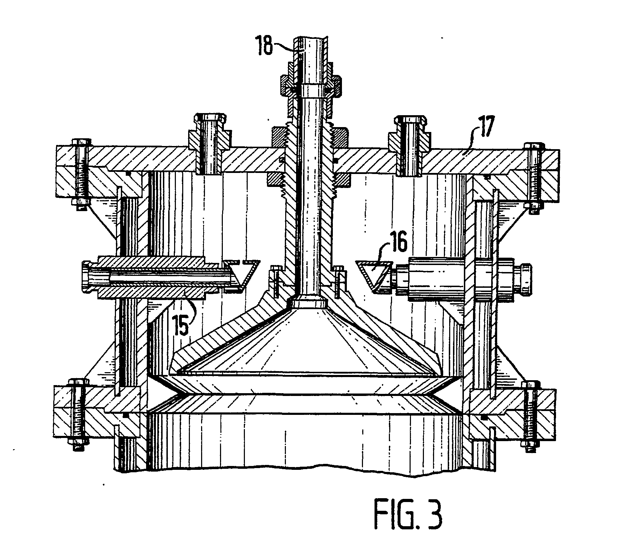

Nachfolgend wird die Erfindung anhand der schematischen Zeichnung eines Säulenreaktors (Fig. 1) und Detailvergrößerungen (Fig. 2 und 3) erläutert: Der gezeigte Säulenreaktor 1 mit einem Thermostatisierungsmantel 2 ist in vier Abschnitte 3 unterteilt, die jeweils eine Festbettschüttung 4 auf einem Siebboden 5 und einen Zwischenraum 6 umfassen, in den Seitenstutzen 7 führen.

Im Zwischenraum 6 ist oberhalb eines ringförmigen Leitelements 8 ein Gasableitungstrichter 9 überlappend vorgesehen, der einen "Ringspalt" 10 zusammen mit dem ringförmigen Leitelement bildet. Dieser Ringspalt 10 kann durch Höhenverstellung des Trichters 9 mittels einer (oder mehrerer) Einstellschraube(n) 11 eingestellt werden. Vom Trichterrohr 9' führt, durch die Packung 4 nach außen ansteigend, ein Verbindungsrohr 12 zum Steigrohr 13, das mindestens bis in Höhe der Flüssigkeitsableitung aus dem Säulenreaktor reicht und zu einem Gassammelraum führt.

In dieses Steigrohr 13 können die Verbindungsleitungen 12 sämtlicher Abschnitte münden, oder aber es können jeweils gesonderte Steigrohre vorgesehen sein, die zum (nicht dargestellten) Gassammelraum führen.

Die Reaktionsflüssigkeit gelangt über einen sternförmigen Verteiler 14 am Boden des Säulenreaktors über den Querschnitt verteilt in das Festbett und umgesetzte Flüssigkeit wird über ein ringförmiges Entnahmerohr 15 mit Auslaßstutzen aus dem Säulenreaktor entnommen. Dieses Ringrohr 15 hat in seiner nach oben weisenden Fläche Bohrungen 16, über die die Flüssigkeit aus dem Reaktor entnommen wird. Zweckmäßig ist der gezeigte dreieckige Querschnitt des Entnahmerohres mit nach unten weisender Spitze.

Der Gasableitungstrichter 9 des letzten Säulenabschnitts ist nicht mehr im Siebboden, sondern in der Säulenabdeckung 17 montiert und sein Trichterrohr 18 führt unmittelbar zum Gassammelraum.

Die Säulenpackung kann durch bekannte Trägerkörper mit daran immobilisierten Mikroorganismen oder mit Biomassen beladene Kornmaterialien o.dgl. gebildet werden. Die einzelnen Abschnitte können im übrigen weitere Stutzen für Sonden, Probenentnahmen, Kontrollflüssigkeiten o.dgl. aufweisen.

Um Überschußschlamm zu entfernen, können in einer Betriebspause beispielsweise über den unteren Flüssigkeitsverteiler 14 und die Seitenstutzen 7 Waschflüssigkeiten durch die Säulenabschnitte gepreßt werden. In diesem Falle wird der Trichter 9 zweckmäßigerweise in seine höchste Position gebracht.

Der gezeigte Reaktor wurde für die anaerobe Reinigung von Brüdenkondensat im halbtechnischen Maßstab über einen Zeitraum von drei Monaten erfolgreich getestet.

## Patentansprüche

1. Säulenreaktor zur Durchführung anaerober Abbauprozesse mit einer Festbett-Schüttung, die von der Reaktionsflüssigkeit aufwärts durchströmt wird, dadurch gekennzeichnet, daß das Festbett durch Siebböden in übereinander angeordnete Abschnitte unterteilt ist, mit Zwischenräumen, in denen allgemein (umgekehrt)-trichterförmige, zu einem oder mehreren Steigrohren außerhalb der Säule führende Gasableitungen und Gas- und/oder Flüssigkeitseinlässe unterhalb des Siebbodens vorgesehen sind.

2. Säulenreaktor nach Anspruch 1, gekennzeichnet durch vom Umfang her in die Säule vorspringende, den freien Querschnitt verengende, ringförmige Leitelemente unterhalb der Gasableitungstrichter, deren Öffnungsquerschnitt größer ist als derjenige der Leitelemente.

3. Säulenreaktor nach Anspruch 1 oder 2, dadurch gekennzeichnet, daß die Gasableitungstrichter etwa am Übergang zwischen Trichter und Trichterrohr im Siebboden des nachfolgenden Festbettabschnitts montiert sind.

4. Säulenreaktor nach einem der vorangehenden Ansprüche, dadurch gekennzeichnet, daß die Höhe des Gasableitungstrichters innerhalb des Zwischenraums verstellbar ist.

5. Säulenreaktor nach einem der vorangehenden Ansprüche, dadurch gekennzeichnet, daß der Konus des Gasableitungstrichters einen Winkel von 15 bis 60° insbesondere 35° gegen die Horizontale aufweist.

6. Säulenreaktor nach einem der vorangehenden Ansprüche, gekennzeichnet durch eine Schütthöhe der einzelnen Festbettabschnitte von 50 bis 200 cm, insbesondere 100 bis 160 cm.

7. Säulenreaktor nach einem der vorangehenden Ansprüche, dadurch gekennzeichnet, daß die Gasableitungen aus der Säule in parallel zur Säule verlaufende, mindestens bis zum oberen Flüssigkeitsablauf des Reaktors reichende Steigrohre einmünden, die zu einem Gassammelraum führen.

8. Säulenreaktor nach einem der vorangehenden Ansprüche, gekennzeichnet durch einen insbesondere mit einem Winkel von 15 bis 30° ansteigenden nach außen führenden Übergang zwischen dem Trichterrohr und dem Steigrohr.

9. Säulenreaktor nach einem der vorangehenden Ansprüche, gekennzeichnet durch eine Flüssigkeitsentnahme am oberen Ende des Festbett-Reaktors, oberhalb des Einlaufs eines letzten Gasableitungstrichters im Reaktorkopf, in Form eines in sich geschlossenen Rohres mit oberen Zulaufbohrungen mit einem Durchmesser von vorzugsweise 4 bis 5 mm.

10. Säulenreaktor nach einem der vorangehenden Ansprüche, gekennzeichnet durch einen sternförmigen Zulaufverteiler für Reaktionsflüssigkeit am Säulenboden.

**Claims**

1. Column reactor for carrying out anaerobic degradation processes, containing a stationary bed particulate material through which the reaction liquid flows in the upward direction, characterized in that the stationary bed is divided by perforated plates into sections arranged above one another with intermediate spaces in which are generally provided (inverted) funnel-shaped gas offtake lines leading to one or more risers outside the column, and also gas inlets and/or liquid inlets below the perforated plate.

2. Column reactor according to Claim 1, characterized by annular control elements below the gas offtake funnels, projecting from the circumference into the column narrowing the open cross-section, the orifice cross-section of the gas offtake funnels being greater than that of the control elements.

3. Column reactor according to Claim 1 or 2, characterized in that the gas offtake funnels are mounted approximately in the region of the transition between funnel and funnel stem onto the perforated plate of the succeeding stationary bed section.

4. Column reactor according to one of the preceding claims, characterized in that the height of the gas offtake funnel is adjustable within the intermediate space.

5. Column reactor according to one of the preceding claims, characterized in that the cone of the gas offtake funnel makes an angle of 15 to 60°, in particular 35°, with the horizontal.

6. Column reactor according to one of the preceding claims, characterized by the height of particulate solid in the individual stationary bed sections being from 50 to 200 cm, in particular 100 to 160 cm.

7. Column reactor according to one of the preceding claims, characterized in that the gas offtake lines from the column discharge into risers running parallel to the column and extending at least to the upper liquid discharge of the reactor, the said risers leading to a gas collection chamber.

8. Column reactor according to one of the preceding claims, characterized by a transference line, between funnel stem and riser, which ascends, in particular at an angle of 15 to 30°, leading to the exterior.

9. Column reactor according to one of the preceding claims, characterized by a liquid withdrawal at the upper end of the stationary bed reactor, above the inlet of a final gas offtake funnel in the reactor head, in the form of an endless pipe having upper feed holes with a diameter of preferably 4 to 5 mm.

10. Column reactor according to one of the preceding claims, characterized by a star-shaped feed distributor for reaction liquid at bottom of the column.

**Revendications**

1. Réacteur en colonne pour la mise en œuvre de processus de décomposition anaérobie, ayant un tas en lit fixe à travers lequel le liquide de réaction passe suivant un mouvement ascendant, caractérisé en ce que le lit fixe est subdivisé par des plateaux tamis en sections disposées les unes au-dessus des autres, avec des chambres intermédiaires dans lesquelles sont prévus, en-dessous du plateau tamis, des conduits d'évacuation du gaz en forme générale d'entonnoir (renversé) et menant à un ou à plusieurs tubes ascendants à l'extérieur de la colonne et des entrées pour du gaz et/ou du liquide.

2. Réacteur en colonne suivant la revendication 1, caractérisé par des chicanes annulaires faisant saillie de la périphérie dans la colonne, rétrécissant la section transversale libre et disposées en-dessous de l'entonnoir d'évacuation du gaz dont la section transversale d'ouverture est supérieure à celle des chicanes.

3. Réacteur en colonne suivant la revendication 1 ou 2, caractérisé en ce que les entonnoirs d'évacuation du gaz sont montés à peu près à la transition entre l'entonnoir et le tube de l'entonnoir dans le plateau tamis de la section à lit fixe suivante.

4. Réacteur en colonne suivant l'une des revendications précédentes, caractérisé en ce que la hauteur de l'entonnoir d'évacuation du gaz est réglable dans la chambre intermédiaire.

5. Réacteur en colonne suivant l'une des revendications précédentes, caractérisé en ce que le cône de l'entonnoir d'évacuation du gaz fait un angle de 15 à 60°, notamment de 35° par rapport à l'horizontal.

6. Réacteur en colonne suivant l'une des revendications précédentes, caractérisé par une hauteur du tas dans chaque section à lit fixe de 50 à 200 cm, et notamment de 100 à 160 cm.

7. Réacteur en colonne suivant l'une des revendications précédentes, caractérisé en ce que les conduits d'évacuation du gaz issus de la colonne débouchent dans des tubes ascendants qui s'étendent parallèlement à la colonne, qui vont au moins jusqu'à l'évacuation supérieure du liquide du réacteur et qui conduisent à une chambre collectrice du gaz.

8. Réacteur en colonne suivant l'une des revendications précédentes, caractérisé par un passage menant vers l'extérieur et s'élevant, notamment sur un angle de 15 à 30°, entre le tube de l'entonnoir et le tube ascendant.

9. Réacteur en colonne suivant l'une des revendications précédentes, caractérisé par un prélèvement de liquide à l'extrémité supérieure du réacteur à lit fixe, au-dessus de l'entrée d'un dernier entonnoir d'évacuation du gaz en tête du réacteur, sous la forme d'un tube fermé sur lui-même et ayant des perçages supérieurs d'amenée d'un diamètre de préférence de 4 à 5 mm.

10. Réacteur en colonne suivant l'une des revendications précédentes, caractérisé par un répartiteur d'amenée en forme d'étoile pour le liquide de réaction disposé au fond de la colonne.

EP 0 193 969 B1

FIG.1

EP 0 193 969 B1

FIG. 2

FIG. 3